# EUROPÄISCHE PATENTSCHRIFT

(11) **EP 2 863 109 B1**
(45) Veröffentlichungstag und Bekanntmachung des Hinweises auf die Patenterteilung: **20.05.2020**
(21) Anmeldenummer: 14185248.3
(22) Anmeldetag: 18.09.2014
(51) Int. Cl.: F21S 41/39, F21S 45/49, F16B 5/06, F21V 17/16

(54) **Kraftfahrzeugbeleuchtungseinrichtung**
Motor vehicle lighting device
Installation d'éclairage d'un véhicule automobile

(30) Priorität: 16.10.2013 DE 202013009156 U
(43) Veröffentlichungstag der Anmeldung: 22.04.2015
(73) Patentinhaber: Automotive Lighting Reutlingen GmbH, 72762 Reutlingen (DE)
(72) Erfinder: Müller, Marcus, 72800 Eningen (DE); Pfitzner, Lothar, 72762 Reutlingen (DE); Kantar, Sascha, 72810 Gomaringen (DE)
(74) Vertreter: DREISS Patentanwälte PartG mbB

(56) Entgegenhaltungen:
- EP-A1- 2 131 101
- WO-A1-2013/037799
- WO-A2-2012/095758
- DE-B- 1 201 617
- FR-A1- 2 781 019
- GB-A- 2 024 396
- JP-U- H0 355 904

## Beschreibung

Die Erfindung betrifft eine Kraftfahrzeugbeleuchtungseinrichtung mit den Merkmalen des Oberbegriffs des Anspruchs 1.

Eine solche Kraftfahrzeugbeleuchtungseinrichtung ist aus der WO2013/037799 A1 bekannt. Sie weist mindestens zwei Bauteile auf, die kraftschlüssig und formschlüssig miteinander verbunden sind, wobei die zwei Bauteile Anlageflächen aufweisen, die durch ein Verbindungselement aufeinander gepresst werden.

Die Verbindung der beiden Bauteile erfolgt bei häufig durch Schraubverbindungen. Nachteilig ist dabei der große Platzbedarf, der bei der Montage der Schraubverbindungen für das Bewegen des Werkzeugs erforderlich ist. Außerdem entstehen beim Festziehen der Schraubverbindung Momente und/oder Spannungsspitzen, die zu einem Verziehen oder einer Beschädigung des Verbundes oder der einzelnen Bauteile des Verbundes führen können.

Die Druckschrift JP H03 55904 betrifft keine Kraftfahrzeugbeleuchtungseinrichtung aber beschreibt wie zwei blechartige Bauteile mithilfe einer Klemme, Ausnehmungen und Eingriffselemente kraftschlüssig und formschlüssig miteinander verbunden werden können.

Vor diesem Hintergrund besteht eine Aufgabe der vorliegenden Erfindung in der Angabe einer Kraftfahrzeugbeleuchtungseinrichtung, deren Bauteile platzsparend und ohne Beschädigungsgefahr montierbar sind.

Diese Aufgabe wird durch eine Kraftfahrzeugbeleuchtungseinrichtung nach Anspruch 1 gelöst.

Die Erfindung unterscheidet sich vom Stand der Technik durch die kennzeichnenden Merkmale des Anspruchs 1.

Das Umgreifen der mindestens zwei Bauteile durch ein zwei Schenkel aufweisendes, insbesondere u-förmiges Klemmelement hat den großen Vorteil, dass das Klemmelement mit einer rein transversalen Montagebewegung montierbar ist, wobei die Bauteile im montierten Zustand kraftschlüssig und formschlüssig verbunden sind. Dabei sind die zu verbindenden Teile bevorzugt sowohl miteinander als auch mit dem Klemmelement verbunden, wobei das Klemmelement bevorzugt mit nur einem der beiden Bauteil verrastet ist.

Dadurch wird im Gegensatz zur Schraubverbindung, die zusätzlich durch eine rotatorische Bewegung montiert wird, weniger Bauraum benötigt. Außerdem können dadurch die Montagehilfsmittel einfacher und kostengünstiger gestaltet sein. Ein weiterer Vorteil ist es, dass durch die kraftschlüssige Verbindung mittels eines transversal zu montierenden Klemmelements die Gefahr gemindert wird, Momente oder Spannungsspitzen zu erzeugen, die zu einem Verziehen oder einer Beschädigung des Bauteils führen.

Erfindungsgemäß weist ein erstes der mindestens zwei Bauteile ein Eingriffselement auf, das ein zweites der mindestens zwei Bauteile durchdringt. Somit wird eine platzsparende und sichere formschlüssige Verbindung zwischen dem ersten und dem zweiten Bauteil hergestellt.

Das Klemmelement ist bevorzugt u-förmig. Die kraftschlüssige Verbindung der Bauteile wird dadurch hergestellt, dass die Bauteile erste Flächen und zweite Flächen aufweisen. Im montierten Zustand liegen die Schenkel des u-förmigen Klemmelements an den ersten Flächen an. Mit den zweiten Flächen liegen die Bauteile aneinander an. Die Schenkel des Klemmelements werden bei der durch Aufbiegen des Klemmelements erfolgender Montage elastisch verformt, so dass in einer Endlage des Klemmelements eine Rückstellkraft senkrecht zu den Flächen wirkt, die die Bauteile zusammen presst.

Die formschlüssige Verbindung der Bauteile kommt dadurch zustande, dass wenigstens eines der zwei Bauteile ein Eingriffselement aufweist, das in einer Endlage des Klemmelements in eine zweite Ausnehmung in den Schenkeln des Klemmelements einrastet.

Ergänzend wird vorgeschlagen, dass das zweite Eingriffselement in eine zweite Ausnehmung in den Schenkeln des Klemmelements einrastet. Dies stellt eine einfache Lösung dar, einerseits wenigstens zwei Bauteile formschlüssig zu verbinden und andererseits das Klemmelement beidseitig gegen Verlieren gesichert in seiner Endlage zu halten.

Es ist bevorzugt, dass eine Oberfläche des ersten Eingriffselements und/oder das zweiten Eingriffselements, die in die zweite Ausnehmung rastet, als schiefe Ebene ausgebildet ist. Das Klemmelement wird auf seinem Weg in die Endlage zunächst mit den beiden Schenkeln über die eine oder über die gegebenenfalls zwei schiefen Ebenen geschoben. Wenn zwei schiefe Ebenen vorhanden sind, so sind diese so angeordnet, dass ihr Abstand in Richtung der Montagebewegung größer wird. Dadurch werden das Klemmelement beim Aufschieben elastisch verformt. Erreicht das Klemmelement die Endlage, liegen die Oberflächen unter den zweiten Ausnehmungen in den Schenkeln. Die Spannung in den elastisch verformten Schenkeln, zieht die Schenkel zurück in Richtung ihrer Ausgangslage, so dass die Oberfläche in den zweiten Ausnehmungen einrastet. Die als schiefe Ebene ausgebildete Oberfläche erleichtert die Montage des Klemmelements und verhindert ein selbständig und unbeabsichtigt erfolgendes Lösen der Klemmverbindung.

Eine weitere Ausgestaltung sieht vor, dass eine Grundseite des Klemmelements eine erste Ausnehmung aufweist und dass wenigstens eines der mindestens zwei Bauteile ein Führungselement aufweist, das dazu eingerichtet und angeordnet ist, die erste Ausnehmung durch eine bei der Aufschiebebewegung automatisch erfolgende Selbst justierung zu zentrieren und damit das Klemmelement zu positionieren. Das Führungselement ist beispielsweise als halbrundförmige Rippe ausgeformt, und die zweite Ausnehmung ist als Rechteck ausgeführt, dessen Breite der Rippendicke und dessen Länge dem Durchmesser des Halbkreises entsprechen.

Die Position der zweiten Ausnehmung, die in einem der Schenkel angeordnet ist oder die gegebenenfalls auch in beiden Schenkeln angeordnet sein kann, ist konstruktiv so festgelegt, dass sie in der Endlage des Klemmelements so über einem Eingriffselement liegt, dass dieses in die Ausnehmung einrasten kann. Durch das Führungselement und die erste Ausnehmung gelangt das Klemmelement zwangsweise und selbst justierend in die richtige Endlage, wodurch die Montage vereinfacht wird.

Es ist bevorzugt, dass das Klemmelement aus Metall gefertigt ist. Ein Klemmelement ist auf einfache Art und Weise durch Stanzen und Biegen aus Metall zu fertigen. Durch die Wahl der Metallart oder der Dicke des verwendeten Blechs, ist die Kraft, die senkrecht zu den Flächen wirkt, beeinflussbar. Bevorzugt ist Federstahl als Material des Klemmelements.

Weiterhin ist es bevorzugt, dass die Schenkel des Klemmelements an ihren freien Enden spitz aufeinander zulaufen. Bei gegebener Verformung, die beim Aufschieben auftritt, sind die Schenkel in der Endlage umso weniger weit geöffnet, je kleiner der Abstand ihrer Enden voneinander vor dem Aufschieben war. Je weniger weit die Öffnung ist, desto kleiner ist eine resultierende Rückstellkraftkomponente, die der Aufschieberichtung entgegengesetzt ist und die daher potentiell zu einer unerwünschten Selbstlösung der Verbindung führen könnte. Denkbar sind auch andere Geometrien der Schenkel, beispielsweise konkav oder konvex gekrümmte Schenkel, die miteinander eine Engstelle bilden, die über die aneinander liegenden Bauteile geschoben wird, wobei der Abstand der Schenkel an der Engstelle geringfügig kleiner ist, als die Dicke der aufeinanderliegende Bauteile.

Eine weitere Ausgestaltung sieht vor, dass wenigstens ein Schenkel des Klemmelements an seinem freien Ende eine Einführgeometrie aufweist. Die Einführgeometrie ist beispielsweise so ausgeführt, dass das freie Ende des Schenkels von dem Bauteil weg gekrümmt ist. Dadurch wird ein Verkanten des Klemmelements mit den Bauteilen bei der Montage vermieden und das Klemmelement kann leicht und schnell montiert werden. Außerdem wird die Gefahr einer Beschädigung der Bauteile beim Aufschieben des Klemmelements vermindert.

Ergänzend wird vorgeschlagen, dass ein drittes Bauteil kraft- und formschlüssig mit den zwei Bauteilen verbunden ist. Die erfindungsgemäße kraft- und formschlüssige Verbindung eignet sich für drei Bauteile, wobei die drei Bauteile Verbindungselemente aufweisen, die sandwichartig aufeinander liegen und von dem Klemmelement wie voranstehend beschrieben zusammengepresst werden. In einer nicht erfindungsgemäßen Ausführung, ist die formschlüssige Verbindung zwischen den drei Bauteilen dadurch gewährleistet, dass das in der Mitte liegende Bauteil auf einer ersten Seite eine Vertiefung und auf einer der ersten Seite gegenüberliegenden zweiten Seite ein Eingriffselement aufweist. In die Vertiefung der ersten Seite greift das Eingriffselement, desjenigen Bauteils, das an der ersten Seite des mittleren Bauteils liegt. Das Eingriffselement des mittleren Bauteils greift in eine Vertiefung, die dasjenige Bauteil aufweist, das an der zweiten Seite des mittleren Bauteils liegt. Auf diese Weise werden drei Bauteile platzsparend und sicher miteinander verbunden. Es versteht sich, dass diejenigen Bauteile die in der sandwichartigen Anordnung der Verbindungselemente außen liegen, die ersten Eingriffselemente aufweisen, an denen die zweiten Ausnehmungen des Klemmelements rasten.

In einer erfindungsgemäßen Ausführung wird vorgeschlagen, dass eines der drei Bauteile das erste Eingriffselement und ein zweites Eingriffselement oder zwei zweite Eingriffselemente aufweist, wobei die beiden anderen Bauteile jeweils ein Durchdringungselement aufweisen. Die beiden Bauteile, die jeweils ein Durchdringungselement aufweisen, können hier die beiden außen liegenden Bauteile oder ein mittleres und ein außen liegendes Bauteil in der sandwichartigen Anordnung der drei Bauteile sein. Ist das Bauteil, das die Eingriffselemente aufweist, ein außen liegendes Bauteil, verfügt es einerseits über ein erstes Eingriffselement, das in die zweite Ausnehmung des Klemmelements rastet, und andererseits über ein zweites Eingriffselement, das zunächst die beiden anderen Bauteile durchdringt und dann in die zweite Ausnehmung des Klemmelements rastet. Es versteht sich, dass das mittlere Bauteil zwei zweite Eingriffselemente aufweist, die zunächst die Durchdringungselemente der beiden außenliegenden Bauteile durchdringen und dann in die zweiten Ausnehmungen des Klemmelements rasten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen jeweils in schematischer Form:
- Figur 1: ein Beispiel einer Kraftfahrzeugbeleuchtungseinrichtung als Umfeld der Erfindung;
- Figur 2: einen Reflektor, der als erstes Bauteilmit einem zweiten Bauteil in Form eines Kühlkörpers verbunden ist;
- Figur 3: ein Verbindungselement aus der Figur 2 in einer ersten Schnittdarstellung; und
- Figur 4: das Verbindungselement aus der Figur 2 in einer zweiten Schnittdarstellung;

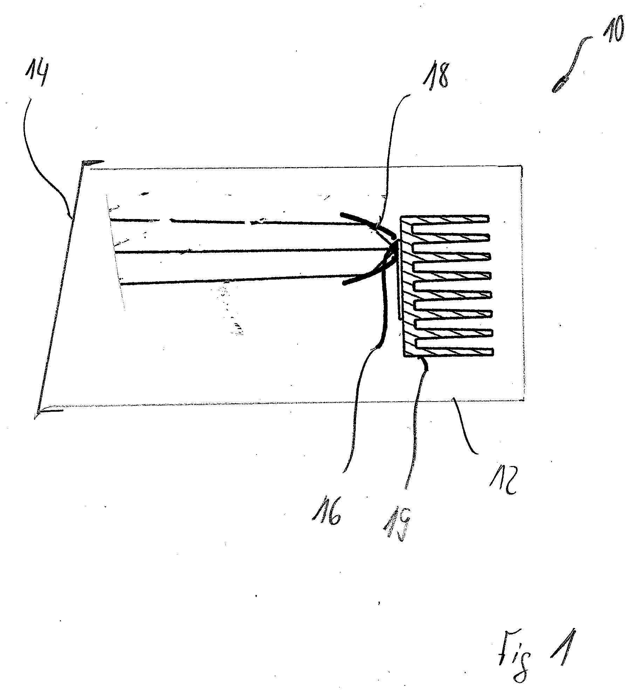

Figur 1 zeigt eine Kraftfahrzeugbeleuchtungseinrichtung 10 mit einem Gehäuse 12, dessen Lichtaustrittsöffnung durch eine transparente Abdeckscheibe 14 verschlossen ist. In dem Gehäuse 12 sind eine Lichtquelle 16 und ein Reflektor 18 angeordnet. Die Lichtquelle 16 ist beispielsweise als Licht emittierende Diode (LED) ausgeführt. Der Reflektor 18 ist dazu eingerichtet und angeordnet, das von der Lichtquelle 16 ausgehende Licht zu bündeln und das gebündelte Licht direkt auf die Abdeckscheibe 14 oder zunächst auf im Lichtweg vor der Abdeckscheibe 14 liegende optische Elemente, wie eine Linse oder eine Blende, zu richten, so dass in einem Vorfeld des Kraftfahrzeugs eine gesetzeskonforme Lichtverteilung erzeugt wird.

Die Beleuchtungseinrichtung 10 ist in einer Ausgestaltung ein Scheinwerfer. In einer anderen Ausgestaltung ist die Beleuchtungseinrichtung 10 eine Signalleuchte. In einer weiteren Ausgestaltung weist die Beleuchtungseinrichtung 10 mehrere Lichtmodule auf, von denen wenigsten eines eine Scheinwerferlichtfunktion und ein weiteres Lichtmodul eine Signallichtfunktion erfüllt.

In der Regel sind die Licht emittierenden Dioden auf einem Trägerelement angeordnet. Das Trägerelement ist zum Beispiel eine Leiterplatte, ein Bestandteil einer Leiterplatte, oder ein separates Teil, das auf eine Leiterplatte montiert ist. Die Leiterplatte dient insbesondere zur elektrischen Kontaktierung der Leuchtdioden. Das Trägerelement steht direkt oder über die Leiterplatte in thermischer Verbindung mit einem Kühlkörper 19. Der Kühlkörper 19 ist dazu eingerichtet, die im Betrieb der LED entstehende Wärme über das Trägerelement und gegebenenfalls über die Leiterplatte aufzunehmen und an die Umgebung abzugeben. Es ist üblich, den Kühlkörper 19 mit dem Reflektor 18 zu verbinden, so dass Lichtquelle, Kühlkörper und Reflektor eine Einheit bilden, die beispielsweise vormontiert wird und anschließend als Baugruppe in das Gehäuse 12 eingebaut integriert wird.

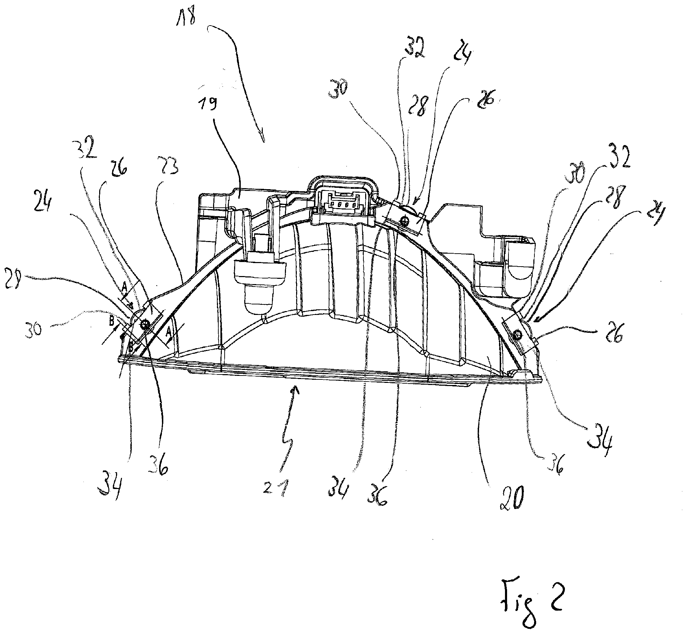

Anhand der in der Figur 2 dargestellten Ausgestaltung wird eine kraft- und formschlüssige Verbindung von zwei Bauteilen der Beleuchtungseinrichtung 10 erläutert. In dem dargestellten Ausführungsbeispiel ist das erste Bauteil 20 der Reflektor 18, und das zweite Bauteil 22 ist der Kühlkörper 19. Die Erfindung ist aber nicht auf diese speziellen Beispiele eines ersten Bauteils und eines zweiten Bauteils beschränkt. Weitere Ausführungsbeispiele zeichnen sich dadurch aus, dass mehr andere Bauteile und/oder auch mehr als zwei Bauteile der Beleuchtungseinrichtung 10 durch erfindungsgemäße Verbindungsstrukturen kraft- und formschlüssig miteinander verbunden sind.

Die Figur 2 zeigt den Reflektor 18 in einer Ansicht, die bei einer bestimmungsgemäßen Verwendung in einem Kraftfahrzeug einer Draufsicht von oben entspricht. Eine Lichtaustrittsseite 21 des Reflektors 18, der sich im Kraftfahrzeug in der Regel in Fahrtrichtung öffnet, weist in der Figur 2 zum unteren Blattrand. Der hier das zweite Bauteil 22 bildende Kühlkörper 19 ist in der Figur 2 weitgehend durch den Reflektor 18 verdeckt und liegt größtenteils unterhalb der Zeichnungsebene.

Für die kraft- und formschlüssige Verbindung weist die Kombination der beiden Bauteile 20 und 22 Verbindungselemente 24 auf. Im gezeigten Ausführungsbeispiel sind drei solche Verbindungselemente 24 über die der Lichtaustrittseite 21 gegenüberliegende Kontur 23 der Kombination verteilt angeordnet. Jedes der Verbindungselemente 24 besteht aus einem Verbindungsbereich des ersten Bauteils 20, einem Verbindungsbereich des zweiten Bauteils 22 und einem Klemmelement 26, das bevorzugt einen u-förmigen Querschnitt aufweist. Das Verbindungselement ist daher eine die Verbindungsbereiche verschiedener Bauteile und das Klemmelement aufweisende Struktur.

Das u-förmige Klemmelement 26 weist zwei flächige Schenkel auf, die durch eine Grundseite 30 miteinander verbunden sind. Von den zwei Schenkeln ist in der Figur 2 jeweils ein Schenkel als Fläche des Klemmelements 30 zu sehen. Die Grundseite 30 erscheint in der Figur 2 als eine Ecken aufweisende Linie. Bei der Montage des Klemmelements wird das Klemmelement translatorisch auf die zunächst nur lose zusammengefügten Bauteile 20 und 22 aufgeschoben. Die beiden Bauteile liegen dabei zum Beispiel mit Anlageflächen aneinander an, die parallel zur Zeichnungsebene der Figur 2 liegen. Die translatorische Bewegung erfolgt in dem dargestellten Ausführungsbeispiel längs einer Richtung, die etwa parallel zu der in der Figur 2 von links oben nach rechts unten verlaufenden Blattdiagonalen ist. Beim Aufschieben werden die flächenförmigen Schenkel senkrecht zur Zeichnungsebene elastisch gespreizt, wodurch pro Klemmelement ein Paar von senkrecht zur Zeichnungsebene ausgerichteten Rückstellkräften aufgebaut wird. Die Rückstellkräfte eines Paars sind dabei entgegengesetzt zueinander ausgerichtet. Dieses Paar von Rückstellkräften presst die beiden Bauelemente 20 und 22 zusammen. Das Klemmelement 26 ist daher dazu eingerichtet, eine Kraft zu erzeugen, die das erste Bauteil 20 und das zweite Bauteil zusammenhält, indem es die Verbindungsbereiche dieser Bauteile jeweils paarweise gegeneinander presst. Genau genommen wird dabei nicht nur eine solche Kraft erzeugt, sondern es wird ein Paar von Kräften erzeugt, die das erste Bauteil 20 und das zweite Bauteil zusammenhalten, indem die Kräfte dieses Paars die Verbindungsbereiche dieser Bauteile jeweils paarweise gegeneinander pressen.

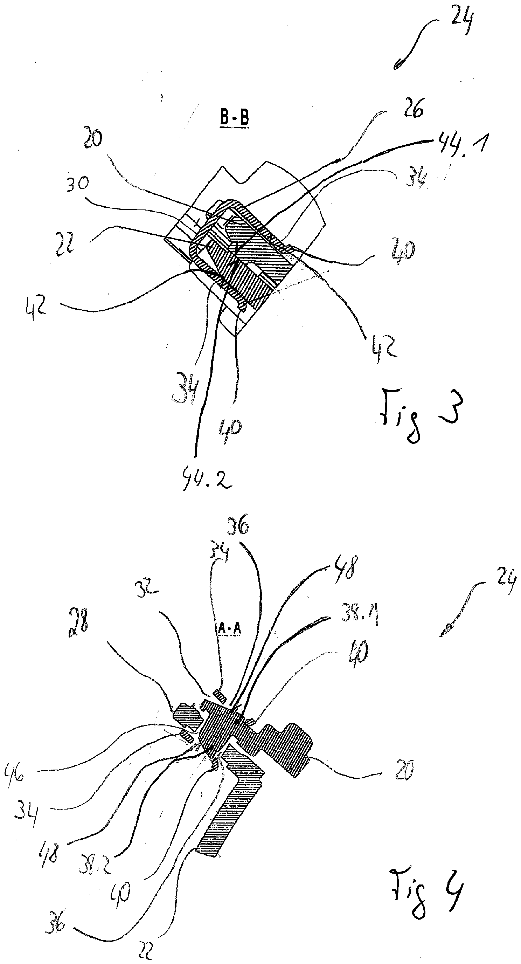

Die genaue Funktionsweise der Verbindungselemente 24 wird weiter unten anhand der nachfolgenden Figuren 3 und 4 noch näher erläutert.

Die Grundseite 30 des Klemmelements weist eine längliche erste Ausnehmung 32 auf. Diese Ausnehmung dient zur Aufnahme eines halbkreisförmigen Führungselements 28, welches ein Bestandteil eines Verbindungbereiches des ersten Bauteils 20 und/oder des zweiten Bauteils 22 ist. Das hier halbrunde Führungselement steht wie eine Wand oder Kühlrippe von einem oder beiden Verbindungsbereichen ab, wobei seine Radien parallel zu der Ebene der translatorischen Montagebewegung des Klemmelements liegen.

Die Wandstärke der Rippe entspricht bevorzugt der Breite der länglichen Ausnehmung in der Grundseite 30 des Klemmelements. Der zur Halbrundform zugehörige Durchmesser ist größer als die Länge der länglichen Ausnehmung in der Grundseite des Klemmelements. Dadurch lässt sich das Klemmelement gerade soweit aufschieben, bis die beiden Schmalseiten der länglichen Ausnehmung an die Halbrundform anstoßen. Dadurch wird die Position des Klemmelements im montierten Zustand festgelegt. Die Ausnehmung in der Grundseite 30 des Klemmelements bewirkt daher im Zusammenwirken mit dem halbkreisförmigen Führungselement eine bei der translatorischen Aufschiebebewegung automatisch erfolgende Zentrierung und damit Selbst justierung der Lage des Klemmelements im montierten Zustand.

Das Führungselement muss nicht notwendig eine Halbkreisform besitzen. Es genügt, wenn das Führungselement eine Form besitzt, mit der es bei montiertem Klemmelement durch die Ausnehmung 32 des Klemmelements so hindurch ragt, dass Randbereiche des hindurch ragenden Teils des Führungselements an den einander gegenüberliegenden Schmalseiten der Ausnehmung anliegen und dass der zwischen diesen Randbereichen liegende und durch die Ausnehmung hindurch ragende Teil des Führungselements sich mit zunehmendem Abstand von den Randbereichen verjüngt. Dies würde zum Beispiel auch durch ein Führungselement erfüllt, das an Stelle der in der Figur 2 sichtbaren Kreisform eine anderweitig konvex gekrümmte Form, zum Beispiel eine konvexe Freiform oder eine elliptische Form oder auch eine Dreiecksform oder eine Trapezform aufweist.

Bei der Montage wird das Klemmelement 26 mit der ersten Ausnehmung 32 über das Führungselement 28 geschoben so dass das Führungselement 28 in die Ausnehmung 32 hineinragt. Die sich beim Aufschieben erweiternde Form des Führungselements 28 führt dazu, dass sich die Lage des Klemmelements beim Aufschieben selbst justierend richtig einstellt, so dass das Klemmelement 26 richtig in seiner Endlage positioniert ist.

Weiter ist aus der Figur 2 ersichtlich, dass ein Schenkel 34 des Klemmelements 26 eine zweite Ausnehmung 36 aufweist. Beim Aufschieben des Klemmelements 26 in seine Endlage rastet ein Eingriffselement 38 des ersten Bauteils oder des zweiten Bauteils in die zweite Ausnehmung 36 ein, so dass das Klemmelement 26 gegen Verlieren gesichert in seiner Endlage positioniert ist. Figur 3 zeigt eine Ausgestaltung, bei der jeder Schenkel 34 des Klemmelements eine Ausnehmung 36 aufweist und das Eingriffselement 38 für den einen Schenkel das Bezugszeichen 38.1 trägt und für den anderen Schenkel das Bezugszeichen 38.2 trägt.

Figur 3 zeigt ein Verbindungselement 24 in einer ersten Schnittdarstellung. Die zugehörige Schnittebene liegt in der Figur 2 senkrecht zur Zeichnungsebene und ist in der Figur 2 als Linie B-B sichtbar.

Das u-förmige Klemmelement 26 weist zwei Schenkel 34 auf. Die beiden Schenkel weisen jeweils ein festes Ende und ein loses Ende auf. Mit dem festen Ende ist jeder Schenkel mit der Grundseite 30 verbunden, so dass die festen Enden über die Grundseite 30 miteinander verbunden sind. Die freien Enden der Schenkel 34 weisen Einführgeometrien 40 auf. Die Einführgeometrien 40 sind beispielsweise dadurch realisiert, dass die freien Enden der Schenkel 34 von demjenigen Bauteil weg gekrümmt sind, an dem der Schenkel 34 anliegt. Die Schenkel krümmen sich damit insbesondere an ihren freien Enden voneinander weg. Dadurch wird beim Aufschieben eine Selbst justierung erzielt, welche das Einfädeln der zu verbindenden Teile in die Öffnung des u-förmigen Klemmelements erleichtert. Die Krümmung wird zum Beispiel durch Umbiegen des jeweiligen freien Endes nach außen erzeugt.

Zwischen den Schenkeln 34 des Klemmelements 26 sind das erste Bauteil 20 und das zweite Bauteil 22 so angeordnet, dass sie zumindest bereichsweise flächig aneinander liegen.

Das erste Bauteil 20 weist in seinem als Teil des Verbindungselementes 24 dienenden Bereich eine erste Anlagefläche 44.1 auf. Das zweite Bauteil 22 weist in seinem als Teil des Verbindungselementes 24 dienenden Bereich eine erste Anlagefläche 44.2 auf. Im zusammengefügten Zustand liegen die beiden Anlageflächen 44.1 und 44.2 aneinander an.
Das erste Bauteil 20 weist in seinem als Teil des Verbindungselementes 24 dienenden Bereich eine zweite Anlagefläche 42.1 auf. Die zweite Anlagefläche ist auf der der ersten Anlagefläche gegenüberliegenden Seite des ersten Bauteils angeordnet und dazu eingerichtet, als Anlagefläche für den einen der beiden Schenkel des Klemmelements zu dienen.

Das zweite Bauteil 20 weist in seinem als Teil des Verbindungselements 24 dienenden Bereich eine zweite Anlagefläche 42.2 auf. Die zweite Anlagefläche ist auf der der ersten Anlagefläche gegenüber liegenden Seite des zweiten Bauteils angeordnet und dazu eingerichtet, als Anlagefläche für den anderen der beiden Schenkel des Klemmelements zu dienen. Im zusammengefügten Zustand der beiden Bauteile 20 und 22 ist der Abstand der beiden zweiten Anlageflächen voneinander so groß, dass die beiden Schenkel des u-förmigen Klemmelements beim Aufschieben gespreizt werden, was letztlich das auf die beiden ersten Anlageflächen wirkende und diese zusammenpressende Kräftepaar erzeugt. Die beiden Bauteile 20 und 21 sind somit kraftschlüssig miteinander verbunden.

Es ist bevorzugt, dass die freien Enden der Schenkel 34 im nichtmontierten Zustand des Klemmelements 26 spitz aufeinander zulaufen. Dies ermöglicht eine große Amplitude der Aufspreizung und damit eine Erzeugung vergleichsweise großer Rückstellkräfte.

Figur 4 zeigt ein Verbindungselement 24 in einer zweiten Schnittdarstellung. Die zugehörige Schnittebene liegt in der Figur 2 senkrecht zur Zeichnungsebene und ist in der Figur 2 als Linie A-A sichtbar.

In der dargestellten Ausgestaltung ist das im Zusammenhang mit der Figur 2 erläuterte Führungselement 28 ein Bestandteil des zweiten Bauteils. Das Führungselement ragt durch die erste Ausnehmung 32, die in der Grundseite 30 des Klemmelements 26 angeordnet ist, hindurch.

In der Figur 4 weist das erste Bauteil 20 zwei Eingriffselemente 38.1 und 38.2 auf. Das erste Eingriffselement 38.1 ist durch seine Form und Anordnung dazu eingerichtet, in eine zweite Ausnehmung 36 desjenigen Schenkels 34 einzurasten, der direkt mit dem ersten Bauteil 20 in Kontakt steht. Dies ist der Schenkel, der an der zweiten Anlagefläche 42 des ersten Bauteils 20 anliegt. Das zweite Eingriffselement 38.2 durchdringt in der dargestellten Ausgestaltung das zweite Bauteil 22, um in die zweite Ausnehmung 36 desjenigen Schenkels 34 einzurasten, der mit dem zweiten Bauteil 22 in Kontakt steht. Dies ist der Schenkel, der an der zweiten Anlagefläche des zweiten Bauteils 22 anliegt. Damit das zweite Eingriffselement 38.2 das zweite Bauteil 22 durchdringen kann, weist das zweite Bauteil 22 ein Durchdringungselement 46 auf. Das Durchdringungselement 46 ist beispielsweise als Ausnehmung in dem Bereich des zweiten Bauteils 22 realisiert, der zu einem Verbindungselement 24 gehört.

Eine Oberfläche 48 des Eingriffselements 38, das mit der der zweiten Ausnehmung 36 verrastet, ist bevorzugt als schiefe Ebene ausgebildet. Die schiefe Ebene ist so geneigt, dass die Schenkel 34 beim Aufschieben des Klemmelements 26 auf die schiefe Ebene gespreizt werden. Kommen die Oberflächen 48 in der Endlage des Klemmelements 26 in den zweiten Ausnehmungen 36 liegen, tendieren die unter Spannung stehenden Schenkel 34 dazu, in ihre Ausgangslage zurück zukehren. Folglich rasten die Eingriffselemente 38 in die zweiten Ausnehmungen 36 ein. Das erste Bauteil 20 und das zweite Bauteil 22 sind dann auch formschlüssig miteinander verbunden, wobei der in einer Ebene wirkende Formschluss durch einen senkrecht dazu wirkenden Kraftschluss gesichert ist.

Die in den Figuren 2 bis 4 beschriebenen Ausführungsbeispiele beziehen sich auf einen Reflektor als erstes Bauteil und einen Kühlkörper als zweites Bauteil. Alternativ oder ergänzend ist vorgesehen, dass das erste Bauteil und/oder das zweite Bauteil auch andere zu der Beleuchtungseinrichtung gehörende Elemente darstellen, wie beispielsweise Blenden, Abdeckungen oder Designelemente.

Weitere Anwendungsbeispiele sehen vor, dass drei Bauteile miteinander verbunden sind, wobei das Klemmelement dann als viertes Bauteil zählen würde. Dabei ist darauf zu achten, dass die Bauteile in den Verbindungselementen 24 sandwichartig aufeinander liegen. Zu Herstellung einer formschlüssigen Verbindung weist eines der Bauteile die Eingriffselemente 38 auf und die beiden anderen Bauteile verfügen über die Durchdringungselemente 46. Eine Ausgestaltung sieht vor, dass das in der Mitte liegende Bauteil auf einer ersten Seite eine Vertiefung und auf einer der ersten Seite gegenüberliegenden zweiten Seite ein Eingriffselement aufweist. In die Vertiefung der ersten Seite greift das Eingriffselement 38 des Bauteils, das an der ersten Seite des mittleren Bauteils liegt. Das Eingriffselement 38 des mittleren Bauteils greift in eine Vertiefung, die das Bauteil aufweist, das an der zweiten Seite des mittleren Bauteils liegt. Es versteht sich, dass das Bauteil, das in der Mitte zwischen den beiden anderen Bauteilen angeordnet ist, nur zweite Flächen 44 aufweist. Dieses Bauteil weist insbesondere keine ersten Flächen 42 auf, an denen die Schenkel 34 des Klemmelements 26 anliegen.

Insgesamt zeigen die Figuren damit insbesondere ein Kraftfahrzeugbeleuchtungseinrichtung 10 mit mindestens zwei Bauteilen 20, 22, die kraftschlüssig und formschlüssig miteinander verbunden sind, wobei die zwei Bauteile 20, 22 Anlageflächen 42, 44 aufweisen, die durch ein Verbindungselement aufeinander gepresst werden. Die Beleuchtungseinrichtung zeichnet sich dadurch aus, dass das Verbindungselement ein zwei Schenkel 34 aufweisendes Klemmelement 26 ist, das dazu eingerichtet ist, die mindestens zwei Bauteile zu umgreifen und dabei eine senkrecht zu den Flächen 42,44 wirkende Kraft zu erzeugen, welche die Flächen 42, 44 aufeinander presst, und wobei wenigstens eines der zwei Bauteile 20, 22 ein Eingriffselement 38 aufweist, das in einer Endlage des Klemmelements 26 in eine zweite Ausnehmung 36 einrastet, die in einem Schenkel 34 des Klemmelements 26 angeordnet ist.

Das Klemmelement ist dabei bevorzugt mit einem der wenigstens zwei Bauteile verrastet. Die beiden Bauteile sind untereinander formschlüssig und durch das Klemmelement auch kraftschlüssig miteinander verbunden.

## Patentansprüche

1. Kraftfahrzeugbeleuchtungseinrichtung (10) mit mindestens zwei Bauteilen (20, 22), die kraftschlüssig und formschlüssig miteinander verbunden sind, wobei die zwei Bauteile (20, 22) Anlageflächen (44.1, 44.2) aufweisen, die durch ein Verbindungselement aufeinander gepresst werden, wobei das Verbindungselement ein zwei Schenkel (34) aufweisendes Klemmelement (26) ist, das dazu eingerichtet ist, die mindestens zwei Bauteile zu umgreifen und dabei eine senkrecht zu den Anlageflächen wirkende Kraft zu erzeugen, welche die Anlageflächen aufeinander presst, und wobei wenigstens eines der zwei Bauteile (20, 22) ein Eingriffselement (38.2) aufweist, das in einer Endlage des Klemmelements (26) in eine Ausnehmung (36) einrastet, die in einem Schenkel (34)' des Klemmelements (26) angeordnet ist, **dadurch gekennzeichnet, dass** das Eingriffselement (38.2) eines der mindestens zwei Bauteile (20, 22) das andere der mindestens zwei Bauteile (20, 22) durchdringt.

2. Kraftfahrzeugbeleuchtungseinrichtung (10) nach vorangehendem Anspruch 1, **dadurch gekennzeichnet, dass** das Klemmelement (26) eine Grundseite (30) aufweist, von der die beiden Schenkel (34) u-förmig weg streben.

3. Kraftfahrzeugbeleuchtungseinrichtung (10) nach Anspruch 2, **dadurch gekennzeichnet, dass** die Grundseite (30) des Klemmelements (26) eine erste Ausnehmung (32) aufweist und dass wenigstens eines der mindestens zwei Bauteile (20, 22) ein Führungselement (28) aufweist, das dazu eingerichtet und angeordnet ist, die erste Ausnehmung (32) zu zentrieren und damit das Klemmelement (26) zu positionieren.

4. Kraftfahrzeugbeleuchtungseinrichtung (10) nach einem der vorangehenden Ansprüche, **dadurch gekennzeichnet, dass** das Eingriffselement (38.2) mit der Ausnehmung (36) verrastet ist, die in den Schenkeln (34) des Klemmelements (26) angeordnet ist.

5. Kraftfahrzeugbeleuchtungseinrichtung (10) nach einem der vorangehenden Ansprüche, **dadurch gekennzeichnet, dass** eine Oberfläche (48) des Eingriffselements (38.2), die in die zweite Ausnehmung (36) einrastet, als schiefe Ebene ausgebildet ist.

6. Kraftfahrzeugbeleuchtungseinrichtung (10) nach einem der vorangehenden Ansprüche, **dadurch gekennzeichnet, dass** das Klemmelement (26) aus Metall gefertigt ist.

7. Kraftfahrzeugbeleuchtungseinrichtung (10) nach Anspruch 6, **dadurch gekennzeichnet, dass** das Klemmelement (26) aus Federstahl gefertigt ist.

8. Kraftfahrzeugbeleuchtungseinrichtung (10) nach einem der vorangehenden Ansprüche, **dadurch gekennzeichnet, dass** die Schenkel (34) des Klemmelements (26) an ihren freien Enden spitz aufeinander zu laufen.

9. Kraftfahrzeugbeleuchtungseinrichtung (10) nach einem der vorangehenden Ansprüche, **dadurch gekennzeichnet, dass** mindestens ein Schenkel (34) des Klemmelements (26) an seinem freien Ende eine Einführgeometrie (40) aufweist.

10. Kraftfahrzeugbeleuchtungseinrichtung (10) nach einem der vorangehenden Ansprüche, **dadurch gekennzeichnet, dass** ein drittes Bauteil kraft- und formschlüssig mit den zwei Bauteilen (20, 22) verbunden ist.

11. Kraftfahrzeugbeleuchtungseinrichtung (10) nach Anspruch 10, **dadurch gekennzeichnet, dass** eines der drei Bauteile ein Eingriffselement (38.2) oder zwei Eingriffselemente (38.2) aufweist, wobei die beiden anderen Bauteile jeweils ein Durchdringungselement (46) aufweisen und wobei das Durchdringungselement dazu eingerichtet ist, von dem Eingriffselement durchdrungen zu werden.

## Claims

1. Motor vehicle lighting device (10) having at least two components (20, 22) which are connected to one another in a non-positive and positively locking manner, the two components (20, 22) having contact surfaces (44.1, 44. 2) which are pressed onto one another by a connecting element, the connecting element being a clamping element (26) which has two legs (34) and is designed to engage around the at least two components and in so doing to generate a force which acts perpendicularly to the bearing surfaces and presses the bearing surfaces onto one another, and at least one of the two components (20, 22) having an engagement element (38. 2), which in an end position of the clamping element (26) engages in a recess (36) arranged in a leg (34) of the clamping element (26), **characterized in that** the engagement element (38.2) of one of the at least two components (20, 22) penetrates the other of the at least two components (20, 22).

2. Motor vehicle lighting device (10) according to claim 1 above, **characterised in that** the clamping element (26) has a base side (30) from which the two legs (34) extend away in a U-shape.

3. Motor vehicle lighting device (10) according to claim 2, **characterised in that** the base side (30) of the clamping element (26) has a first recess (32) and **in that** at least one of the at least two components (20, 22) has a guide element (28) which is set up and arranged to centre the first recess (32) and thus position the clamping element (26) .

4. Motor vehicle lighting device (10) according to one of the preceding claims, **characterised in that** the engagement element (38.2) is latched with the recess (36) which is arranged in the legs (34) of the clamping element (26).

5. Motor vehicle lighting device (10) according to one of the preceding claims, **characterised in that** a surface (48) of the engagement element (38.2), which engages in the second recess (36), is formed as an inclined plane.

6. Motor vehicle lighting device (10) according to one of the preceding claims, **characterized in that** the clamping element (26) is made of metal.

7. Motor vehicle lighting device (10) according to claim 6, **characterised in that** the clamping element (26) is made of spring steel.

8. Motor vehicle lighting device (10) according to one of the preceding claims, **characterized in that** the legs (34) of the clamping element (26) run towards one another in a pointed manner at their free ends.

9. Motor vehicle lighting device (10) according to one of the preceding claims, **characterised in that** at least one leg (34) of the clamping element (26) has an insertion geometry (40) at its free end.

10. Motor vehicle lighting device (10) according to one of the preceding claims, **characterised in that** a third component is connected to the two components (20, 22) in a non-positive and positive-locking manner.

11. Motor vehicle lighting device (10) according to claim 10, **characterised in that** one of the three components has an engagement element (38.2) or two engagement elements (38.2), wherein the two other components each have a penetration element (46) and wherein the penetration element is adapted to be penetrated by the engagement element.

## Revendications

1. Dispositif d'éclairage de véhicule automobile (10) comprenant au moins deux composants (20, 22) qui sont reliés par adhérence et à engagement positif les uns aux autres, dans lequel les deux composants (20, 22) présentent des surfaces d'appui (44.1, 44.2) qui sont pressées l'une contre l'autre par un élément de liaison, dans lequel ledit élément de liaison est un élément de serrage (26) présentant deux branches (34) qui est conçu pour embrasser lesdits au moins deux composants et ainsi générer une force qui agit perpendiculairement aux surfaces d'appui et presse les surfaces d'appui l'une contre l'autre, et dans lequel l'un au moins des deux composants (20, 22) comprend un élément d'engagement (38.2) qui, dans une position finale de l'élément de serrage (26), s'enclenche dans un évidement (36) qui est disposé dans une branche (34) de l'élément de serrage (26), **caractérisé par le fait que** l'élément d'engagement (38.2) de l'un desdits au moins deux composants (20, 22) pénètre l'autre desdits au moins deux composants (20, 22) .

2. Dispositif d'éclairage de véhicule automobile (10) selon la revendication 1 précédente, **caractérisé par le fait que** ledit élément de serrage (26) présente un côté de base (30) à partir duquel les deux branches (34) font saillie en U.

3. Dispositif d'éclairage de véhicule automobile (10) selon la revendication 2, **caractérisé par le fait que** le côté de base (30) de l'élément de serrage (26) présente un premier évidement (32) et que l'un au moins desdits au moins deux composants (20, 22) présente un élément de guidage (28) qui est conçu et disposé pour centrer le premier évidement (32) et ainsi positionner l'élément de serrage (26).

4. Dispositif d'éclairage de véhicule automobile (10) selon l'une quelconque des revendications précédentes, **caractérisé par le fait que** l'élément d'engagement (38.2) est enclenché avec l'évidement (36) qui est disposé dans les branches (34) de l'élément de serrage (26).

5. Dispositif d'éclairage de véhicule automobile (10) selon l'une quelconque des revendications précédentes, **caractérisé par le fait qu'**une surface (48) de l'élément d'engagement (38.2), qui s'enclenche dans le deuxième évidement (36), est conçue en tant que plan oblique.

6. Dispositif d'éclairage de véhicule automobile (10) selon l'une quelconque des revendications précédentes, **caractérisé par le fait que** l'élément de serrage (26) est réalisé à partir de métal.

7. Dispositif d'éclairage de véhicule automobile (10) selon la revendication 6, **caractérisé par le fait que** l'élément de serrage (26) est réalisé à partir d'acier à ressort.

8. Dispositif d'éclairage de véhicule automobile (10) selon l'une quelconque des revendications précédentes, **caractérisé par le fait que** les branches (34) de l'élément de serrage (26) s'effilent l'une vers l'autre à leurs extrémités libres.

9. Dispositif d'éclairage de véhicule automobile (10) selon l'une quelconque des revendications précédentes, **caractérisé par le fait qu'**au moins une branche (34) de l'élément de serrage (26) présente une géométrie d'introduction (40) à son extrémité libre.

10. Dispositif d'éclairage de véhicule automobile (10) selon l'une quelconque des revendications précédentes, **caractérisé par le fait qu'**un troisième composant est reliés par adhérence et à engagement positif aux deux composants (20, 22).

11. Dispositif d'éclairage de véhicule automobile (10) selon la revendication 10, **caractérisé par le fait que** l'un des trois composants présente un élément d'engagement (38.2) ou deux éléments d'engagement (38.2), dans lequel les deux autres composants comprend chacun un élément de pénétration (46) et dans lequel l'élément de pénétration est conçu pour être pénétré par l'élément d'engagement.
